# EUROPÄISCHE PATENTSCHRIFT

(11) **EP 1 967 756 B1**
(45) Veröffentlichungstag und Bekanntmachung des Hinweises auf die Patenterteilung: **05.09.2012**
(21) Anmeldenummer: 07023614.6
(22) Anmeldetag: 06.12.2007
(51) Int. Cl.: F16D 65/12

(54) **Radbolzenhülse für eine keramische Bremsscheibe**
Wheel bolt bushing for a ceramic brake disc
Douille de pivot de roue pour un disque de frein en céramique

(30) Priorität: 09.03.2007 DE 102007011525
(43) Veröffentlichungstag der Anmeldung: 10.09.2008
(73) Patentinhaber: AUDI AG, 85045 Ingolstadt (DE)
(72) Erfinder: Reulein, Harald, 86750 Megesheim (DE)
(74) Vertreter: Asch, Konrad

(56) Entgegenhaltungen:
- EP-A- 1 013 956
- DE-B3- 10 321 795
- GB-A- 2 228 053
- US-A1- 2001 040 076

## Beschreibung

Die Neuerung betrifft eine keramische Bremsscheibe mit einer Hülse, insbesondere eine Carbon-Keramik-Bremsscheibe, gemäß dem Oberbegriff des Anspruchs 1.

Üblicherweise werden Carbon-Keramik-Bremsscheiben in zweiteiliger Form ausgeführt, wobei ein keramischer zylinderringförmiger Reibring an einem metallischen Topf befestigt wird. Der metallische Topf wird seinerseits an einer Nabe an der Radwelle (Radnabe) mit Hilfe von Verschraubungen befestigt.

Eine derartige Befestigung ist beispielsweise aus der Patentschrift EP 0 718 521 B1 bekannt.

Wird eine Carbon-Keramik-Bremsscheibe ohne Topf ausgeführt, erfolgt also die Befestigung der Carbon-Keramik-Bremsscheibe direkt an der Radnabe, so ist es wegen der mechanischen Eigenschaften von keramischen Werkstoffen erforderlich, die Aufnahmelöcher für die Radbolzen in dem keramischen Werkstoff so zu gestalten, dass die bei der Befestigung der Bremsscheibe und im Betrieb der Bremse entstehenden Drücke, die auf den keramischen Werkstoff wirken, so gering gehalten werden, dass keine Schädigung desselben auftreten kann.

Die Aufgabe wird durch die im Schutzanspruch 1 beschriebenen Merkmale gelöst. Bevorzugte Ausführungsformen sind in den Unteransprüchen angegeben.

Die mit der vorliegenden Erfindung erzielten Vorteile sind insbesondere eine Vermeidung der Schädigung der keramischen Werkstoffe durch Vermeidung des direkten Kontakts zwischen dem keramischen Werk-stoff und dem Gewindeteil des Befestigungsbolzens, und die damit verbundene Schonung des keramischen Werkstoffs bei dem Betrieb und insbesondere einer Demontage der Bremsscheibe. Der auf den keramischen Werkstoff wirkende Druck wird gleichmäßig auf den Innenteil der Bohrung oder des Lochs verteilt und damit auf einen Wert verringert, der unterhalb der Schädigungsschwelle liegt.

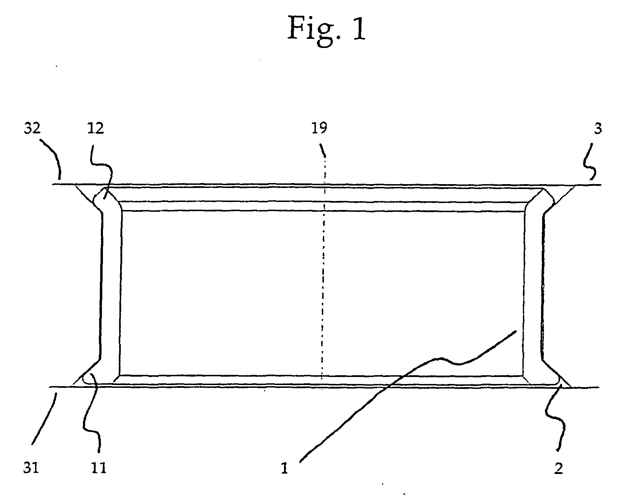

Ein Ausführungsbeispiel gemäß der Neuerung wird durch die Zeichnung dargestellt. Dabei zeigt die
- Fig. 1: einen Schnitt durch eine keramische Bremsscheibe mit einem für die Aufnahme eines Befestigungsbolzens bestimmten Loch und einer in das Loch eingesetzten Hülse.

Im einzelnen ist eine Hülse 1 dargestellt für die Aufnahme eines Befestigungsbolzens in einem Loch 2 oder einer Bohrung einer keramischen Bremsscheibe 3, wobei die Hülse 1 aus Metall ausgeführt ist und an einer Seite mit einem Kragen 11 ausgerüstet ist, und wobei eine verrutsch- und verliersichere Befestigung durch Aufbördelung 12 am gegenseitigen Hülsenende erfolgt, und wobei sowohl der Kragen 11 als auch die Aufbördelung 12 nicht über die die Oberfläche der keramischen Bremsscheibe 3 bildenden Begrenzungsebenen 31, 32 senkrecht zur Loch- oder Bohrungsachse 19 hinausstehen.

Es ist bevorzugt, dass der axiale Abstand zwischen dem Hülsenkragen 11 und der die Oberfläche der keramischen Bremsscheibe 3 bildenden Begrenzungsebene 31 senkrecht zur Loch- oder Bohrungsachse 19 sowie zwischen der Aufbördelung 12 und der die Oberfläche der keramischen Bremsscheibe 3 bildenden Begrenzungsebene 32 senkrecht zur Loch- oder Bohrungsachse 19 jeweils unabhängig voneinander mindestens 0,1 mm und höchstens 0,5 mm beträgt.

Die Hülse 1 ist symmetrisch zur Achse 19 des Lochs 2 oder der Bohrung in der keramischen Bremsscheibe 3 ausgebildet. Das Loch 2 ist zu beiden Oberflächen 31, 32 der keramischen Bremsscheibe 3 hin gefast, wobei es bevorzugt ist, einen Winkel von höchstens 45° zur Oberfläche 31, 32 auszubilden. Besonders bevorzugt beträgt der Winkel zwischen 30° und 42°, insbesondere 35° bis 40°. Ein flacherer Winkel hat sich insbesondere für die hier betrachteten keramischen Werkstoffe bewährt.

Die Wandstärke der Hülse 1 beträgt vorzugsweise mindestens 0,5 mm und vorzugsweise höchstens 3 mm.

Die mit den neuerungsgemäßen Hülsen ausgerüsteten Bremsscheiben bieten insgesamt einen verbesserten Brewskamfort. Die so ausgerüsteten Bremsscheiben sind wegen der an den Scheiben fixierten Hülsen leichter zu montieren als solche mit losen Hülsen, die Bohrungen oder Löcher werden sowohl bei der Montage und Demontage geschützt, und es ergibt sich eine gleichmäßigere Verteilung des Lochleibungsdrucks als bei einer Ausführung mit einer losen Hülse.

## Patentansprüche

1. Keramische Bremsscheibe (3) mit einer Hülse (1) für die Aufnahme eines Befestigungsbolzens in einem Loch (2) oder einer Bohrung der keramischen Bremsscheibe (3), **dadurch gekennzeichnet, dass** die Hülse (1) aus Metall ausgeführt ist und an einer Seite mit einem Kragen (11) ausgerüstet ist, dass eine verrutsch- und verliersichere Befestigung durch Aufbördelung (12) am gegenseitigen Hülsenende erfolgt, und dass sowohl der Kragen (11) als auch die Aufbördelung (12) nicht über die die Oberfläche der keramischen Bremsscheibe (3) bildenden Begrenzungsebenen (31, 32) senkrecht zur Loch- oder Bohrungsachse (13) hinausstehen.

2. Keramische Bremsscheibe (3) mit einer Hülse (1) nach Anspruch 1, **dadurch gekennzeichnet, dass** die Wandstärke der Hülse mindestens 0,5 mm beträgt.

3. Keramische Bremsscheibe (3) mit einer Hülse (1) nach Anspruch 1, **dadurch gekennzeichnet, dass** die Wandstärke der Hülse maximal 3 mm beträgt.

4. Keramische Bremsscheibe (3) mit einer Hülse (1) nach Anspruch 1, **dadurch gekennzeichnet, dass** das Material der Hülse aus Stahl, Messing, Aluminium und Titan ausgewählt ist.

5. Keramische Bremsscheibe (3) mit einer Hülse (1) nach Anspruch 1, **dadurch gekennzeichnet, dass** der axiale Abstand zwischen dem Hülsenkragen (11) und der die Oberfläche (31) der keramischen Bremsscheibe (3) bildenden Begrenzungsebene (31) senkrecht zur Loch- oder Bohrungsachse (19) mindestens 0,1 mm beträgt.

6. Keramische Bremsscheibe (3) mit einer Hülse (1) nach Anspruch 1, **dadurch gekennzeichnet, dass** der axiale Abstand zwischen dem Hülsenkragen (11) und der die Oberfläche (31) der keramischen Bremsscheibe (3) bildenden Begrenzungsebene (31) senkrecht zur Loch- oder Bohrungsachse (19) höchstens 0,5 mm beträgt.

7. Keramische Bremsscheibe (3) mit einer Hülse nach Anspruch 1, **dadurch gekennzeichnet, dass** der axiale Abstand zwischen der Aufbördelung (12) und der die Oberfläche der keramischen Bremsscheibe (3) bildenden Begrenzungsebene (32) senkrecht zur Loch- oder Bohrungsachse (19) mindestens 0,1 mm beträgt.

8. Keramische Breinsscheibe (3) mit einer Hülse nach Anspruch 1, **dadurch gekennzeichnet, dass** der axiale Abstand zwischen der Aufbördelung (12) und der die Oberfläche der keramischen Bremsscheibe (3) bildenden Begrenzungsebene (32) senkrecht zur Loch- oder Bohrungsachse (19) höchstens 0,5 mm beträgt.

## Claims

1. Ceramic brake disc (3) comprising a sleeve (1) for receiving a fastening bolt in a hole (2) or in a borehole of the ceramic brake disc (3), **characterised in that** the sleeve (1) is made of metal and is equipped on one side with a collar (11), **in that** slip-proof and captive fastening is achieved by a flange (12) on the opposite sleeve end, and **in that** neither the collar (11) nor the flange (12) projects beyond the boundary planes (31, 32), perpendicular to the hole axis or borehole axis (19), which form the surface of the ceramic brake disc (3).

2. Ceramic brake disc (3) comprising a sleeve (1) according to claim 1, **characterised in that** the wall thickness of the sleeve is at least 0.5 mm.

3. Ceramic brake disc (3) comprising a sleeve (1) according to claim 1, **characterised in that** the wall thickness of the sleeve is at most 3 mm.

4. Ceramic brake disc (3) comprising a sleeve (1) according to claim 1, **characterised in that** the material of the sleeve is selected from among steel, brass, aluminium and titanium.

5. Ceramic brake disc (3) comprising a sleeve (1) according to claim 1, **characterised in that** the axial spacing between the sleeve collar (11) and the boundary plane (31), perpendicular to the hole axis or borehole axis (19), which forms the surface (31) of the ceramic brake disc (3) is at least 0.1 mm.

6. Ceramic brake disc (3) comprising a sleeve (1) according to claim 1, **characterised in that** the axial spacing between the sleeve collar (11) and the boundary plane (31), perpendicular to the hole axis or borehole axis (19), which forms the surface (31) of the ceramic brake disc (3) is at most 0.5 mm.

7. Ceramic brake disc (3) comprising a sleeve (1) according to claim 1, **characterised in that** the axial spacing between the flange (12) and the boundary plane (32), perpendicular to the hole axis or borehole axis (19), which forms the surface of the ceramic brake disc (3) is at least 0.1 mm.

8. Ceramic brake disc (3) comprising a sleeve (1) according to claim 1, **characterised in that** the axial spacing between the flange (12) and the boundary plane (32), perpendicular to the hole axis or borehole axis (19), which forms the surface of the ceramic brake disc (3) is at most 0.5 mm.

## Revendications

1. Disque de frein en céramique (3) avec une douille (1) pour la réception d'un boulon de fixation dans un trou (2) ou un perçage du disque de frein en céramique (3), **caractérisé en ce que** la douille (1) est formée de métal et est équipée, sur un côté, d'un collet (11), **en ce qu'**une fixation à l'abri d'un décentrage ou d'une perte se fait par bordage (12) sur l'extrémité opposée de la douille et **en ce qu'**autant le collet (11) que le bordage (12) ne ressortent pas des plans limites (31, 32) formant la surface du disque de frein en céramique (3) perpendiculairement à l'axe (13) du trou ou du perçage.

2. Disque de frein en céramique (3) avec une douille (1) selon la revendication 1, **caractérisé en ce que** l'épaisseur de paroi de la douille est d'au moins 0,5 mm.

3. Disque de frein en céramique (3) avec une douille (1) selon la revendication 1, **caractérisé en ce que** l'épaisseur de paroi de la douille est au maximum de 3 mm.

4. Disque de frein en céramique (3) avec une douille (1) selon la revendication 1, **caractérisé en ce que** le matériau de la douille est choisi parmi l'acier, le laiton, l'aluminium ou le titane.

5. Disque de frein en céramique (3) avec une douille (1) selon la revendication 1, **caractérisé en ce que** la distance axiale entre le collet (11) de la douille et le plan limite (31) formant la surface (31) du disque de frein en céramique (3) atteint au moins 0,1 mm perpendiculairement à l'axe (19) du trou ou du perçage.

6. Disque de frein en céramique (3) avec une douille (1) selon la revendication 1, **caractérisé en ce que** la distance axiale entre le collet (11) de la douille et le plan limite (31) formant la surface (31) du disque de frein en céramique (3) atteint au moins 0,5 mm perpendiculairement à l'axe (19) du trou ou du perçage.

7. Disque de frein en céramique (3) avec une douille selon la revendication 1, **caractérisé en ce que** la distance axiale entre le bordage (12) et le plan limite (32) formant la surface du disque de frein en céramique (3) atteint au moins 0,1 mm perpendiculairement à l'axe (19) du trou ou du perçage.

8. Disque de frein en céramique (3) avec une douille selon la revendication 1, **caractérisé en ce que** la distance axiale entre le bordage (12) et le plan limite (32) formant la surface (3) du disque de frein en céramique atteint au maximum 0,5 mm perpendiculairement à l'axe (19) du trou ou du perçage.
